Europäisches Patentamt

European Patent Office

Office européen des brevets

(11) Publication number: **0 368 611**
**A2**

## (12) EUROPEAN PATENT APPLICATION

(21) Application number: 89311503.0

(51) Int. Cl.5: **B65H 75/34, H02G 11/02**

(22) Date of filing: 07.11.89

(30) Priority: 08.11.88 GB 8826179

(43) Date of publication of application:
16.05.90 Bulletin 90/20

(84) Designated Contracting States:
DE FR IT

(71) Applicant: FRAZER-NASH DEFENCE SYSTEMS LIMITED
Randalls Way
Leatherhead Surrey KT22 7TX(GB)

(72) Inventor: Squires, Nicholas Edward
54 Bamborough Close
Southwater Horsham West Sussex RH13 7XG(GB)
Inventor: Green, Richard Philip
19 Cumberland Place
Sunbury-on-Thames Middlesex TW16 6EP(GB)

(74) Representative: Hayward, Denis Edward Peter et al
Lloyd Wise, Tregear & Co. Norman House
105-109 Strand
London WC2R 0AE(GB)

(54) Reeling system for cables.

(57) In a cable reeling system, especially for multi-core cables that are not only tensile but also include signal line conductors and/or conduits for transmitting signals or fluids along the cable, the cable is paid out and hauled in by a motor-driven drum acting as a winch barrel but the proximal end of the cable, instead of terminating on the winch barrel, is continued therefrom to be stowed around a fixed drum, with the cable length between the fixed drum and the rotary barrel being reeled onto and paid off the fixed drum by a rotating planetary assembly around and coaxial with the fixed drum. The rotating barrel and the fixed drum may be coaxial with one another, with the planetary assembly, consisting of a planet carrier and an array of planet drums thereon, disposed in the annular confines within the rotary barrel and around the fixed drum. The cable wrapped around and leaving the fixed drum is first wrapped around the planet array in the reverse direction of wrapping and then is led out through the periphery of the rotary barrel to a fixed anchorage point on the circumference of the barrel where it unites with the external length of cable that is paid off and reeled onto the rotary barrel. The winch barrel is motor-driven and the planetary assembly has a torque applied to it always in the same direction to keep the inner length of cable inside the rotary barrel taut.

## REELING SYSTEM FOR CABLES

This invention relates to cable-reeling systems in which it is desired to pay-out and reel-in a tensile cable, such as a towing cable, while maintaining an ability to transmit signals or power or conduct fluids along the cable, for instance between a tractor vehicle and a towed vehicle or drogue.

The conventional way of transmitting signals, such as electrical signals, along a cable that is to be paid-out and reeled-in is by means of a multi-way slip ring assembly at the reel end of the cable. These slip ring assemblies are far from a satisfactory solution to the problem because they need to be custom built for each particular application, according to the number and nature of the signals to be transmitted, they are extremely costly, and they are not really suitable for use in transmitting small signals.

It is therefore an object of this invention to provide an arrangement that eliminates the use of slip rings.

Another object of the invention is to achieve a reeling system in which there is no tendency for the cable to become twisted, thereby avoiding the risk of damaging valuable multi-core cables.

According to the invention, the cable, or at least the signal transmitting or fluid-conducting component of it, is reeled on and paid off a fixed drum by a planetary assembly that rotates around the fixed drum. By having a fixed termination for the cable the need to provide, for example, slip rings for signal transmission or rotary porting for fluid transmission, with the attendant problems of wear and signal degradation or fluid leakage, is entirely eliminated.

In the preferred embodiment, the cable is also wound around a rotary drum that serves as a winch barrel. The rotary drum and fixed drum may be coaxial, with the fixed drum and planetary system disposed within the confines of the larger diameter rotary drum.

One arrangement according to the invention will now be described by way of example and with reference to the accompanying drawings, in which:-

Figure 1 is a diagrammatic view of a reel assembly embodying the invention, shown in axial section on the line 1-1 of Figure 2,

Figure 2 is a diagrammatic end elevation of the reel assembly of Figure 1, as seen on the line 2-2 of Figure 1, showing the cable configuration within the main drum of the reel when the external cable is paid-out or partially paid-out,

Figure 3 is a view similar to Figure 2 but showing the cable configuration within the main drum of the reel when the external cable is reeled-in, and

Figure 4 is a diagram, in elevation, of an alternative arrangement of reel assembly.

In the drawings, an inner fixed cable drum 2 is carried between a pair of fixed stub shafts 11 around which are mounted to rotate, on respective bearings 12, 13, a planetary carrier 4 and an outer rotary drum 1. The cable itself is comprised of a tensile length 7, that is wound around and paid out and reeled in by the rotary drum 1 acting as a winch in conventional manner, and an inner length 8 that is handled within the confines of the outer drum 1 by the fixed drum 2 and planet drums 3 on the planetary carrier 4, the inner length consisting either of an extension of the whole body of the external cable 7 including the tensile component or of merely the signal-transmitting (or fluid-conducting) component of the outer cable, which latter component may run protected inside the tensile component or casing of the cable along the external length 7.

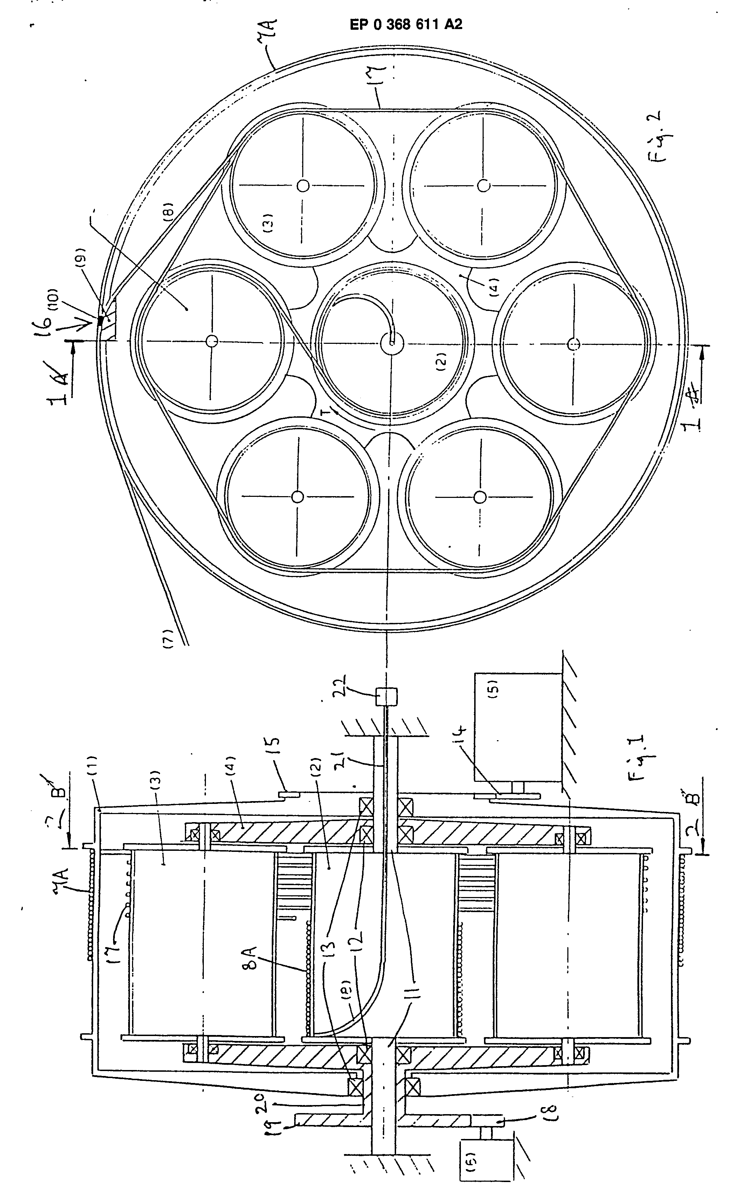

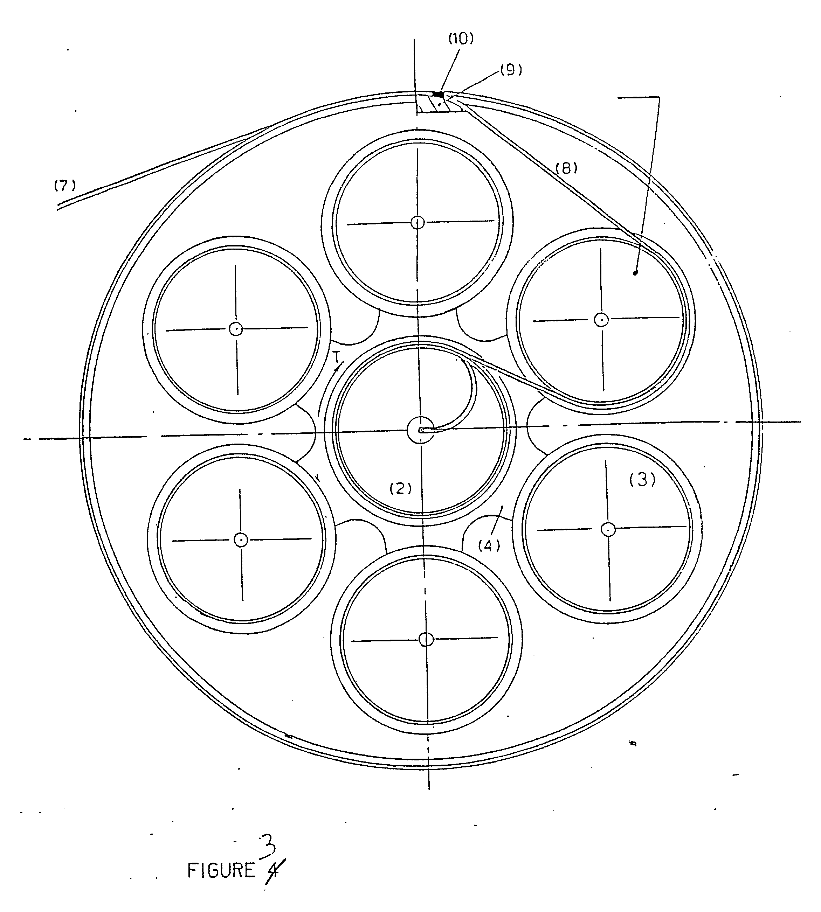

The outer drum 1 can be driven clockwise or anti-clockwise by a motor 5 having a pinion 14 meshing with a ring gear 15 on the drum. Clockwise rotation of the drum 1, as viewed in Figure 2, recovers paid-out external cable 7 and winds it around the drum 1 for stowage. The inner extremity of the external length 7 of the cable, that is to say the end of the cable coil 7A on the drum periphery that is remote from the coil end where the cable is wound on and paid out, is continuous with or connected to the further cable length 8 inside the drum 1 which is wound around the planetary assembly and the inner fixed drum 2, the two lengths 7, 8 uniting at a position 16 on the drum 1 which rotates with the drum. The inner cable length 8 runs out from the planetary assembly and passes over a bend alleviator 9, through the peripheral wall of the drum 1, to join to the cable length 7 on the drum periphery, where the inner cable either continues on to become the outer cable or is connected to the outer cable length by a coaxial connector. Since the cable should not be permitted to slip at this point a cable clamp 10 is provided to fix it to the drum periphery.

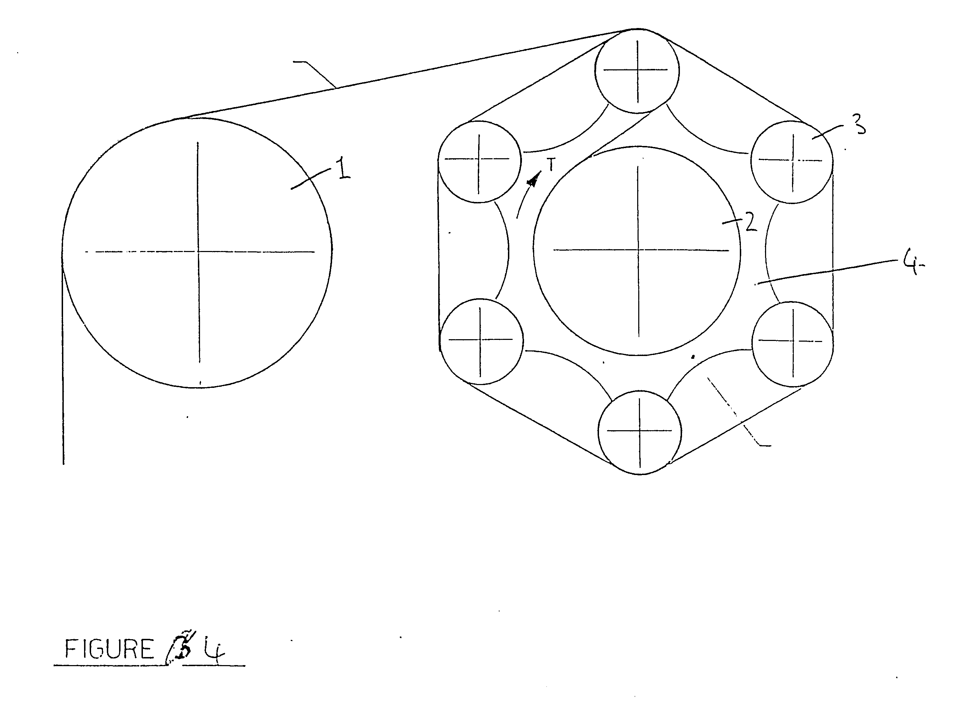

When the cable is fully reeled in (Figure 3), the entire length of the inner cable 8 is stored as a coil 8A around the stationary inner drum 2, apart from a short length extending from that drum around the leading planetary drum 3 and out to join to the external cable length 7. To deploy the external length of cable 7 the outer drum 1 is rotated anti-clockwise, as viewed in Figure 2, and as the point 16 on the drum periphery spins around the axis of the drums the planetary carrier 4 also turns anti-clockwise and the inner length of cable 8 is drawn off the stationary inner drum 2 and becomes wrapped around the planet drums 3, as indicated at 17. To prevent slack in the cable length 8 during this process, a clockwise torque is maintained on the planetary carrier 4 by a torquing device 6 which has a pinion 18 meshing with a gear 19 on a quill 20 extending from the carrier 4.

For every anti-clockwise revolution of the outer drum 1, a proportion of one complete turn of the coil of cable 8 on the inner drum 2 will be unwrapped from the inner drum. Because of the manner in which the inner cable 8 is handled by the planetary drums, one revolution of the outer drum 1 will result in less than one full revolution of the carrier wheel 4. This in turn means that less than one full wrap of cable will be removed from the inner drum 2. However, an exact relationship exists between revolutions of the outer drum 1 and the length of inner cable 8 unwound from the inner drum 2 for any one reel system design. This relationship can be varied in different systems, as required, by appropriate choice of the geometries of the outer, inner and planetary drums 1, 2, 3 and the planetary carrier 4.

In general, it is desirable to have as small an inner drum 2 as possible, except that due regard must be paid to the fact that the smaller this diameter is the smaller the bend radius of the cable wound on the drum and the minimum cable bend radius must be compatible with maintaining the integrity of the cable. It is also advantageous to have the overall diameter of the planetary drum assembly 3, 4 not too much smaller than the diameter of the outer drum 1. While it is desirable for accurate layering of the inner cable 8 around the inner drum and the planet drums that there should be not more than one layer of cable around each, multiple layers of the external cable 7 may be wound around the outer drum 1.

To recover and stow the external cable 7 the outer drum 1 is rotated clockwise. Clockwise torque is maintained on the planetary carrier 4 by the device 6 to keep the inner cable 8 under tension and cause the carrier 4 also to rotate clockwise, rewinding the inner cable on the inner drum 2. The torquing device 6 thus only needs to be a simple arrangement for loading the carrier 4 in the same sense at all times.

To aid inner cable alignment and layering on the inner drum 2 and the planetary drums 3, grooves may be machined in the drum surfaces. The grooving on the inner drum 2 should be of a single start helical type following the helical lay of the stowed inner cable. The grooves on the planet drums 3 should likewise be of single start helical type but of opposite hand to the helix on the inner drum, i.e. right hand if the helix on the inner drum is left hand. All planet drums have the same single start helix, the pitch of which will depend on the ratio of the diameters of the outer and inner drums 1, 2.

To ensure correct layering of cable around the planetary drums, the following relationship should be observed between the helical groove pitch and the groove pitch circle diameters (PCD) of the inner drum and the planetary drums:-

$$\frac{\text{Groove Pitch, Inner Drum}}{\text{Groove Pitch, Planetary Drum}} = \frac{\text{Groove PCD, Inner Drum}}{\text{Groove PCD, Planetary Drum.}}$$

As seen in Figure 1, at the end of the coil of cable 8A on the inner drum 2 remote from where the cable is paid off to and rewound from the planet drums 3, the cable is led into the fixed drum 2 and thence through one of the stub shafts 11, as at 21, to a fixed terminal block 22 outside the reeling system.

Figure 4 shows an alternative arrangement with the outer drum 1 removed from the common axis to work as a separate capstan. Several turns of cable on the capstan drum ensure grip for winching in the cable under duty loads. The carrier 4 and planet drums 3 continue to act as a cable tensioning device with the torque active in the same direction at all times. Unlike the scheme of Figs. 1 to 3, the external cable is now unwound from store on the stationary inner drum 2 instead of from a large rotating outer drum.

There is essentially no limit to the size or number of planet drums that can be used for the arrangements described. In practice, the geometry will tend to be dictated by the cable size and minimum bend radius. In certain applications, the planet drums can all be geared to one another or coupled by a belt.

## Claims

1. A cable reeling arrangement for a cable constructed to incorporate signal lines and/or power conductors and/or conduits for transmitting signals/power/fluids along the cable, wherein the cable, or at least the signal or power transmitting or fluid-conducting component of it, is reeled on and paid off a fixed drum by a planetary assembly that rotates around the fixed drum.

2. An arrangement according to Claim 1, wherein the cable leaving the fixed drum and planetary assembly is wound around a rotary drum that serves as a winch barrel.

3. An arrangement according to Claim 2, wherein the rotary drum coaxially surrounds the fixed drum, and the planetary assembly is disposed in the annular space within the rotary outer drum and around the fixed inner drum.

4. An arrangement according to any preceding claim, wherein the planetary assembly comprises a planet carrier mounted to rotate about the axis of the fixed drum and a set of planet drums rotatably mounted in circumferential array on the carrier, the cable being wrapped around the planet drum array in the reverse direction to the wrapping of the cable on the fixed drum.

5. An arrangement according to Claims 3 and 4, wherein the cable leaving the planetary assembly passes out through the periphery of the rotary drum to a fixed anchorage thereon which rotates with the drum, at which fixed point the cable length internal to the rotary drum and the cable length external to the rotary drum are united.

6. An arrangement according to Claim 5, wherein at the region immediately before it emerges through the rotary drum periphery the cable is passed over a profiled guide serving as a bend alleviator.

7. An arrangement according to any of Claims 2, 3, 5 and 6, wherein the rotary drum is motor-driven and the planetary assembly is subject to the action of a torquing device tending to turn it always in the same direction to keep the length of cable between the fixed and rotary drums taut.

8. An arrangement according to any of Claims 4 to 6, or Claims 4 and 7, wherein the fixed drum and the planet drums are each provided on their surfaces with single start helical grooves to receive the cable, the groove helix of each planet drum being of opposite hand to the groove helix of the fixed drum.

9. An arrangement according to Claim 8, wherein the helix pitches of the grooves on the planet drums and the fixed drum and the groove pitch circle diameters (PCD) of the planet drums and the fixed drum obey the relationship:-

$$\frac{\text{Groove Pitch, Inner Drum}}{\text{Groove Pitch, Planetary Drum}} = \frac{\text{Groove PCD, Inner Drum}}{\text{Groove PCD, Planetary Drum}}.$$

4

Fig. 1

Fig. 2

FIGURE 3

FIGURE 4